# EUROPEAN PATENT APPLICATION

(11) **EP 1 092 596 A1**
(43) Date of publication of application: **18.04.2001**
(21) Application number: 99600016.2
(22) Date of filing: 13.10.1999
(51) Int. Cl.: B60R 19/40, B61F 19/04

(54) **System and device to protect trains, automobiles, ships and their passengers**

(71) Applicant: Karramanoukian, Haroutoun A., Aleppo (SY)
(72) Inventor: Karramanoukian, Haroutoun A., Aleppo (SY)
(74) Representative: Argyriadis, Korinna

(57) **Abstract**

The present invention relates to a system and a device to protect trains and automobiles and their passengers from accidents. The system consists of a hydraulic circuit with mechanical parts. The device is designed to be mounted on the frontal or back fender of an automobile, i.e. between the fender and chassis of an automobile, or on the frontal section of a train. The system is aimed to absorb the shock, which results when an automobile or train collides with a rigid body while it is moving with whatever the speed is, when railways are damaged etc. The device of the present invention consists of a hydraulic circuit, springs, mechanical joints, steel cables, which together form a single complete unit, ready to protect an automobile and its passengers from impacts. Alternatively, the hydraulic part is not needed for applications in trains, in which case the device consists only of a spring-joint part.

## Description

The present invention relates to a system and a device to protect trains and automobiles and their passengers from accidents. The system consists of a hydraulic circuit with mechanical parts. The device is designed to be mounted on the frontal or back fender of an automobile, i.e. between the fender and chassis of an automobile, or on the frontal section of a train. The system is aimed to absorb the shock, which results when an automobile or train collides with a rigid body while it is moving with whatever the speed is, when railways are damaged etc.

The device of the present invention consists of a hydraulic circuit, springs, mechanical joints, steel cables, which together form a single complete unit, ready to protect an automobile and its passengers from impacts. Alternatively, the hydraulic part is not needed for applications in trains, in which case the device consists only of a spring-joint part.

### Background of the invention

In the field of automobile manufacturing there has been great progress in safety measures aiming to protect automobile passengers from fatal accidents. There are many safety systems used today, among them the most popular being a) the air-bag system, and b) the safety-belt.

Air-bags inflate as soon as the automobile collides with a rigid body. They are mounted directly on the driving-wheel in order to save the driver, whereas in the advanced devices another air-bag is mounted on the front panel to protect the passenger sitting next to the driver, others may be provided in the side sections or even the backside of the front seats.

The safety-belt alone protects the passengers partially, but is not a complete protection and does not in any way protect the automobile itself.

It needs to be mentioned here that there is no protection system whatsoever for train passengers.

The present inventions scope is to provide a safety system for all passengers, both of automobiles and trains, as well as of the automobile or train itself, which is best used in combination with safety-belts and other systems. The device works automatically according to the speed of the automobile or train and starts functioning according to the design (of automobile or train), its weight and length. The velocity of the air while an automobile or train moves should be taken into consideration, so that no influence is expressed on the movements of the system, in order to keep the balance of the vehicle.

### Brief description of the invention

The present invention relates to a system of an accurate hydraulic, mechanical device, which can be installed on automobiles from the front and back directions, and on trains on the frontal section to protect from accidents. The device is designed to work at both low and high speed, i.e. it is efficient in city traffic, on free-ways or high-speed-trains. The device operates automatically according to the speed absorbing shocks to zero and by that ensures the lives of passengers. In trains instead the system is stable and related to size and speed. Hydraulic controllers control the hydraulic parts of the device with respect to automobiles, electronic sensors for shocks and braking are part of the device in all embodiments of the present invention.

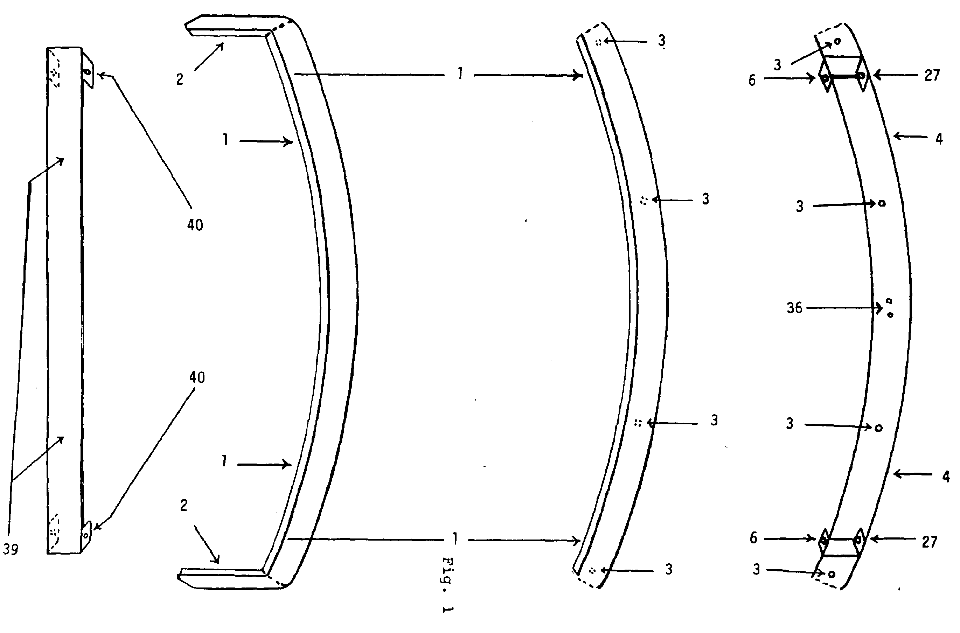

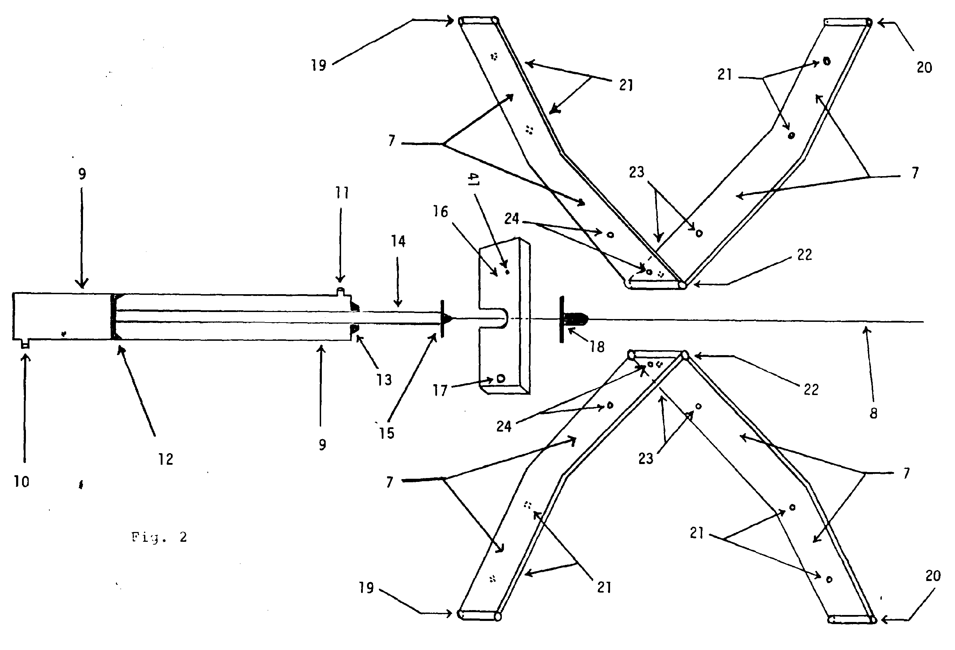

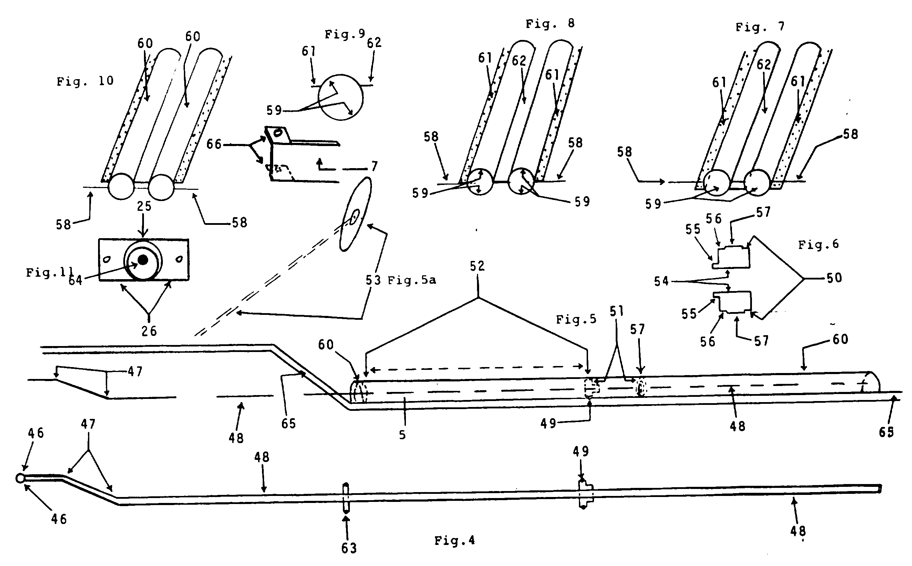

When the fender is hit, the fender unit (1) receives a sudden blow. To avoid concentration of the whole impact pressure on the frontal part of the automobile, and in order to relieve this pressure so the automobile-facade is not distorted, it is noted to distribute the impact-pressure in a way that the spring (34) (Fig. 3), fixed in the fender unit (1), absorbs one third of the impact force, and at the same time the ball (46) (Fig. 4) receives two thirds of the impact force and transmits it to a stronger spring (5) to absorb it. In other words, the spring (34) in the fender unit, fixed between fender (1) and rail (39), is relatively weak, and for that reason it absorbs one third of the impact force only, whereas the spring (5) and the unit fixed under the floor of the automobile may be much stronger than the previous spring, so it absorbs two thirds of the impact-force, which is transmitted to it via the fender and the metallic ball (46) and the metallic axle (48).

### Brief description of the drawings

Fig. 1 shows a front fender with the fixing holes of the device.

Fig. 2 shows the main joint between fender and chassis, the steel cables, the hydraulic pistons, the air vents, the hudraulic pressure gaskets and the fixing points (holes).

Fig. 3 (a-h) shows various parts in detail, such as the spring, joints, hydraulic pump, switch, pressure controller etc.

Fig. 4 shows the metallic axle with the frontal base and the metallic strip.

Fig. 5 and 5a shows the metallic tube, its support means, the springs, the axle and the relative position of an automobile-driving-wheel to the under platform structure.

Fig. 6 shows the rear spring base, the inner circumference of the structure, the frontal circumferential shoulder and the metallic structure.

Fig. 7 and 8 show the automobile floor with the metallic sheets and strips to be fixed on the sides of the metallic tube.

Fig. 9 shows the inner circumference of the metallic tube in detail.

Fig. 10 shows the metallic tubes on the automobile floor.

Fig. 11 shows the spring base, the spring fixing center and the supporting center of the metallic sphere (64).

Fig. 12 shows the frontal part of the system for trains with the automatic electronic brake sensors and the joint.

Fig. 13 and 14 show the joint center to connect mechanical groups with each other.

Fig. 15 shows the fixing base on the frontal section of a locomotive and the joint' fixing center.

Fig. 16 shows the wagon with its pivotal center to fix the units and the weight tank.

### Detailed description of the invention

The present invention's system is an accurate hydraulic, mechanical device which can be installed on automobiles on the front and back sides, as well as on trains on the frontal section, to protect the vehicle and its passengers from accidents. The device is designed to work at both low and high speed, i.e. it is efficient in city traffic, on free-ways or high-speed-trains, and functions automatically according to the speed of the vehicle, its design, weight and length, absorbing shocks. Examples of applications and operation are given for the different vehicles.

### Example 1

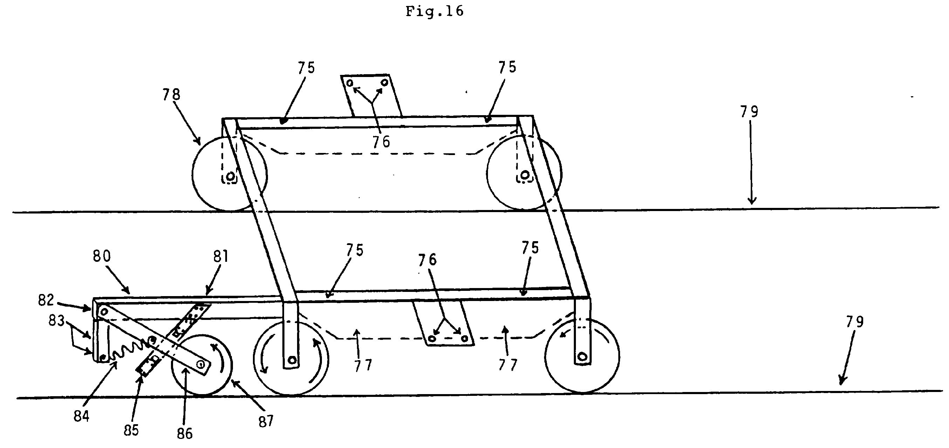

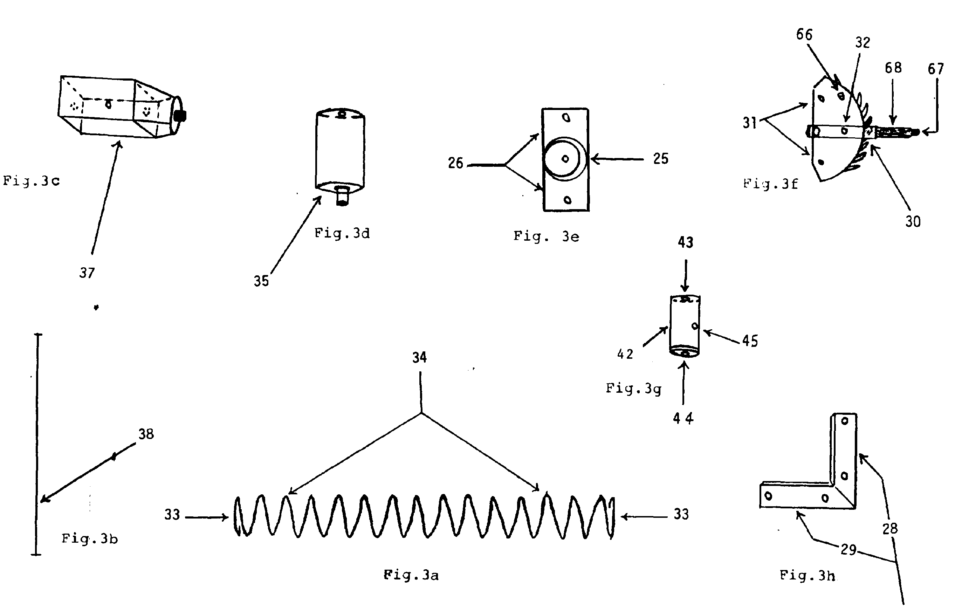

In trains the installation of the system is only on the frontal section of the train. In this case the hydraulic part is omitted and only the spring-joint part is used, where the springs do not have to be very strong either. Three or more electronic sensors (85) for shocks (Fig. 16) are fitted on the frontal part of the system, the fender (75), and they are distributed in a suitable manner in order to receive the shock before other elements and send instant order to the train wheels to brake at once. At the same time the system starts functioning to absorb the shock, which diminishes the shock force to zero and keeps the train and its passengers unharmed.

The device is mounted in the frontal part of the locomotive and after every 5-10 such devices a small four-wheel wagon is connected that moves on the railway in front of the locomotive, loaded suitably with suitable weights in order not to go off-rail when it receives a sudden blow. The length of this mini-wagon is designed according to the weight of the train and its maximum speed. In order to explain the structure and its function an example is presented: In case the system is combined from several parts on a train, suppose it is 20 parts, i.e. 20 arms on the right of rail track, and 20 arms on the left of the rail track, the 19 parts would be combined via joint (19) on the pivotal center (69), but the last part: 20^{th} part would be mounted on the pivotal center (72) as is shown in Fig. 12.

In case the frontal part (70) of the device fixed at the fender receives a sudden shock, one of the electronic brake sensors (85) gets the blow directly and gives an electronic order to the emergency brakes of the train, which automatically brings the train to an immediate halt. At the same time the device starts functioning to absorb the shock and the shock force is diminished to zero, so that the train and its passengers remain safe. As an example, if two trains are moving at a speed of 200 Km/h each and both bear the device according to the present invention, which in this case would each be open for a length suitable to the respective train's speed etc., and the trains collided, the two devices according to the present invention with their parts would receive the shock and absorb it until neutralization of the full impact force, i.e. to zero, and both trains would remain without damage. It must be noted here that in order to avoid injuries of passengers due to the sudden emergency braking, train passengers should use safety belts similar to passengers in airplanes or automobiles. This, by the way, ought to be the rule in trains in any case.

To enhance safety and for complete protection of passengers and train a mechanical unit (87) is added, connected to the frontal part of the said mini-wagon. This unit is intended to protect the train in cases of earthquake that causes a shift in railway tracks, terrorist actions, blocking of railway tracks by items such as rocks, treetrunks, other wagons, containers etc. This unit gives an electronic order to the train brakes to automatically stop the train. In case of an earthquake, a void space would occur between the railway tracks, so the wheel of the unit (87) with the joint (86) would fall in the void formed by the earthquake. The electronic sensors (85) will be pressed giving the immediate order to the brakes to stop the train at once and thus the device starts functioning. In case of hard items on the rails, the wheel will rise over those hard items and press the electronic sensor giving the immediate order to the brakes to stop the train. So in both cases the mechanical unit (87) responds and presses the sensor, which functions to halt the train.

### Example 2

In automobiles the first operation part of the device might start at 40 Km/h speed, the second part at 70 or 80 Km/h, the third part at 120 Km/h and the fourth part at very high speeds. At the first part the device opens slightly, which is proportional to the speed of the automobile and at the same time suitable to light shocks. At the second part the device opens again proportional to the higher speed etc.

For automobiles the operation of the device begins when the driver first turns the engine on. A second arm (68), the system's arm, is installed besides the hand-brake arm with an electric push-button (67) on its upper point. After releasing the hand-brake, the driver presses the button (67) (Fig. 3f) to release the arm (68), which belongs to the toothed mechanical device (30). By this the arm is pushed forward in the same manner as the arm of the hand-brake. By pressing the button (67) the driver sends an electrical command to the electrical switch (37) (Fig. 3c) to function and to get back a little, i.e. a short distance to enable the joint bearing (16) to be released, releasing also the bearing (18) fixed on the steel cable (8) (Fig. 2). At this point the system is ready to operate.

As mentioned above, the device of the system according to the present invention works automatically according to the speed of the automobile and is mounted on both automobile fenders, on frontal and rear sides. When the speed of the automobile reaches the minimum designed speed for the first part of the system, for example 40 Km/h, the electronic switch (37) opens and pushes the hydraulic piston (9) forward (Fig. 2), and the fender (1) moves forward with the rail (4), the same happens to the steel cable (8) mounted in hole (36), and the springs (34) become free, the double joints (7) open, i.e. the complete unit moves forward and gets ready to absorb any external impact. When the fender of an automobile is hit, the fender unit (1) receives a sudden blow. To avoid concentration of the whole impact pressure on the frontal part of the automobile, and in order to relieve this pressure so the automobile-facade is not distorted, it is noted to distribute the impact-pressure in a way that the spring (34), fixed in the fender unit (1), absorbs one third of the impact force, and at the same time the ball (46) receives two thirds of the impact force and transmits it to a stronger spring to absorb it. In other words, the spring in the fender unit, fixed between fender (1) and rail (39), is relatively weak, and for that reason it absorbs one third of the impact force only, whereas the spring and the unit fixed under the floor of the automobile is stronger than the previous spring, so it absorbs two thirds of the impact-force, which is transmitted to it via the fender and the metallic ball (46) and the metallic axle (48). In this manner the impact pressure is distributed on two units: the upper one of the fender (1) and the lower one, which is fixed at the automobile floor, the impact force thus approaching zero, which saves the automobile from distortion and harm and the passengers from danger.

When the automobile stops, the driver pulls the arm (68) backwards (Fig. 3f), the bearing (16) is closed, and when the arm (68) reaches the tooth end fixed on the toothed mechanical device (30) it reaches a zone without any teeth but with an electric push-button fixed on it with a spring (66), so it compresses it for no more than one second, then coming back to lie on the metallic teeth. In this way it gives an order to the electronic hydraulic switch (37) to relief pressure from the hydraulic piston (9), so that the bearing (18) lies on the joint bearing (16) and the unit stops functioning completely, which saves the hydraulic circuit of the system and keeps it in good condition. Thus the safety of the hydraulic circuit is maintained, so as it does not stay under pressure in case the automobile is stopped for a certain period of time, either long or short.

### Example 3

The system operates also to protect ships when navigating according to the same principles, but with special designs: it must be installed on all four directions of the ship to prevent side collisions, especially in bad weather conditions.

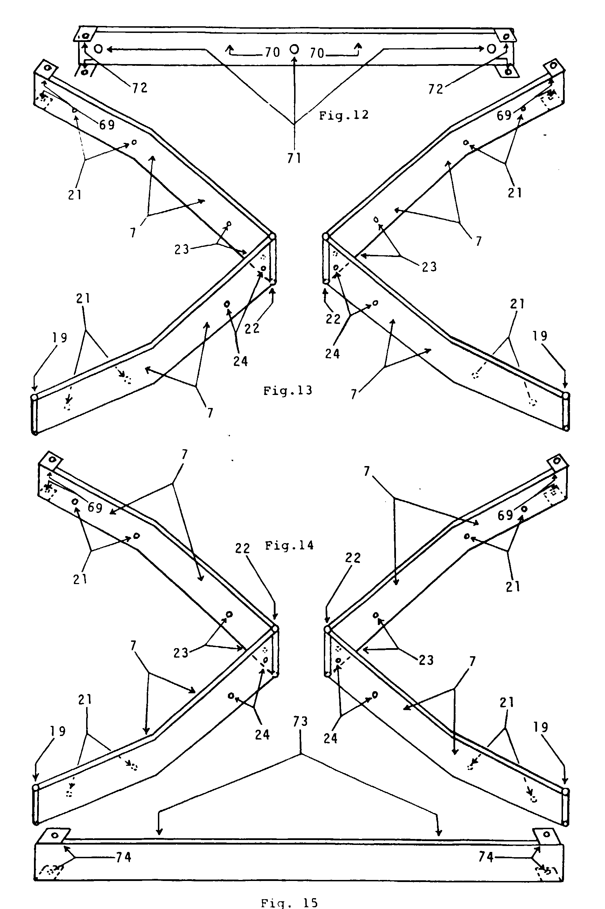

Following is an explanation and statement of the numbers and their indices illustrated in the Figures attached with the description of the present invention:
1.The front part of the fender.
2.Two sides of fender. The fender stays in place when the device works.
3. Holes to fix the rail (4) inside the fender.
4. Rail within fender.
5.Spring to absorb 2/3 of impact force.
6. Hole centers to fix hollow cylinder (20).
7. Main joint between fender and chassis.
8. Steel cable which connects the beginning of the cable (36) with the holder (15) to fix the unit with fender, it doesn't form any hindrance during impact.
9. Hydraulic piston.
10. Air vent on hydraulic piston (9).
11. Hole on hydraulic piston (9) to let hydraulic oil in.
12. Hydraulic pressure gasket on hydraulic piston (9).
13. Hydraulic oil leak proof gasket on hydraulic piston (9).
14. Hydraulic piston axle.
15. Steel cable holder on hydraulic piston axle (14).
16. Joint bearing to keep the piston (9) in its normal position. It blocks the piston in its place, and the bearing blocks the piston and doesn't allow it and the fender to move out of its normal place. Besides, the bearing (18) rests on the joint bearing (16) after it is locked, so that the piston does not remain under pressure for a long time in order to save the hydraulic circuit.
17. Hole center to fix bearing (16).
18. Bearing for joint bearing (16) located on steel cable (8).
19. Hollow cylinder to fix the main joint (7) on chassis (40).
20. Hollow cylinders of the main joint (7) to fix the base (27) on rail (4) within fender (1).
21. Hole centers to fix spring base (26), which holds the spring head (25).
22. Hole to connect two wings of the joint (7).
23. Hole center on which a mechanical part (28) is mounted, intended to form a cycle limit for joint wings (7) so the wings are not permitted to open more than fixed limits, and this is determined according to the automobile-model and its size.
24. Hole center for the mechanical part (29), which forms the limit to the wing of the joint (7) from the opposite side.
25. Spring fixing center.
26. Spring base.
27. Hydraulic tank.
28. Mechanical part, which forms the limit to the joint wing (7).
29. Mechanical part, which forms the limit to the joint from the other side.
30. Toothed mechanical device to open and close joint (16).
31. Hole centers to fix the toothed mechanical device (30) on the automobile.
32. Hole, on which a small steel head (38) is fixed in order to open and close the joint (16).
33. Spring end to be fixed on spring fixing center (25).
34. Steel spring.
35. Hydraulic pump, to be fixed on the automobile engine near the hydraulic pump of the automobile-driving wheel.
36. Hole, where the beginning of cable to be fixed on rail (4) arranged within the fender (1).
37. Electrical hydraulic switch (12 or 24v) according to the automobile.
38. Small steel cable to be fixed between hole (32) and hole center (41).
39. Rail, fixed on the automobile-chassis from both the front and back sides. This rail is formed according to the model of the automobile.
40. Hollow cylinder center to fix cylinder (19).
41. Hole center to fix a steel cable (38) intended to open and close joint (16).
42. Hydraulic pressure controller, to be fixed at the back-side of the hydraulic piston (9) in order to protect it.
43. Hydraulic oil input hole.
44. Center to control the pressure of hydraulic controller (42).
45. Hydraulic oil outlet to a switch (37), then to the hydraulic tank (27).
46. Metallic ball, fixed in the concave room of the supporting center (64). It forms a joint from one side and is fixed at the end of the metallic axle from the other side. This ball receives the impact force from the fender unit and transmits it to the underneath unit fixed under the automobile floor.
47. Slight curvature at the beginning of the metallic axle (48), so that the axle would pass beneath the main joint (7), [see Fig (4)].
48. Metallic axle, begins at the metallic ball (46), which is concentrated in the concave room of the supporting center (64) formed on the spring base (26). The axle is considered as a guide to the spring (34) (see Fig. 4).
49. Frontal base of the spring (34) fixed on the axle (48). This base is surrounded with rubber to limit friction between metallic tube (60), surrounding the spring (5), and axle (48), and to suppress noise resulting from this friction (Fig. 4).
50. Back circumferential shoulder on which the rear part of the metallic tube (60) is fixed. The tube is fixed by electrical arc welding, which is formed on the metallic formation (57) (Fig.6).
51. Spring length at the end of compression part (Fig. 5).
52. Spring length without compression (Fig. 5).
53. Schematic drawing, which shows automobile-driving wheel, and its position relative to the under platform structure in order to show the position of the automobile facade (Fig. 5).
54. Inner circumference of the structure (57), in it a rubber ring noise suppresser is fixed, through it passes the axle (48) (Fig. 6).
55. Rear spring base (Fig. 6).
56. Frontal circumferential shoulder on which the frontal part of the tube (60) is fixed by electric arc welding and formed on the metallic structure (57) (Fig. 6).
57. Metallic structure, which supports the two parts of the tube (60), fixed from both sides by electric arc welding (Fig. 6).
58. Floor of the automobile (Figs 7, 8, 10).
59. Inner circumference of metallic tube (60) (Fig. 7, 8, 10).
60. Metallic tube (Fig. 10).
61. Metallic sheets to be fixed on the sides of the metallic tube (60) by electric arc welding (Fig. 7, 8, 10).
62. Metallic strips, which complete the two sheets (61) fixed with electric arc welding between two tubes (60) where the sheets (61) and the strips (62) are at the same level (Fig. 7, 8, 9).
63. Metallic strip surrounded with rubber, which supports the axle (48) and goes into the metallic tube (60) during compression of the underneath unit. Fig. 5 shows schematically the position of the underneath unit relative to the floor of the automobile, in order to make it suitable to the design of the floor of the automobile. This position could be raised or lowered to avoid having big curvature (47) on the metallic axle (48), so that the underneath unit's level is suitable to the height of the frontal unit.
64. Supporting center of the metallic ball (46), which is a covcave room, the room forms with the metallic ball (46) a joint unit (Fig. 11).
65. Usual springs in electrical push-buttons.
66. Electric push-button with a spring (Fig. 3f).
67. Electric push-button fixed at the top of the arm (68) of the system. The arm (68) is connected to the mechanical device (30) (Fig. 3).
68. System operating arm (Fig. 3f).
69. Pivotal center to connect joint mechanical groups with each other in case several groups of connecting rods (7) are fitted so that hollow cylinder (19) is mounted on it as is shown in Figs 13 and 14.
70. Frontal part of system (the train fender) on which centers of the automatic brake electronic sensors (71) are fixed.
71. Centers to fix the sensors of the electronic braking of the train (so if these to stop the train) as shown in Fig. 12.
72. Pivotal center shown on Fig. 12 (fender) so hollow center (20) is mounted on it.
73. Fixing base on the frontal section of the locomotive, on which the system unit is shown in Fig. 15.
74. Fixing center for joint (19), which is shown on Fig. 15.
75. Wagon, 2 meters long on 4 wheels similar to the train wheels, forming connection point between every several parts of the system, i.e. such a wagon is added after 5 to 6 parts in accordance with the number of parts used, the maximum speed of the train and its weight. The wagon is shown in Fig. 16, and it is equipped with the following spare parts:
76. Pivotal center to fix the beginning and end of each unit of the system (Fig. 16).
77. Tank to be filled with heavy weights suitable to prevent system from going off-rail when receiving the shock, Fig. 16.
78. Wheels of the wagon, Fig. 16.
79. Rail of the train, Fig. 16.
80. Metallic base to be fixed in the frontal part of wagon (75)
81. Base on which the electronic sensors (85) are fixed.
82. Center for jointed arm.
83. Base on which the spring (84) is fixed.
84. Tension spring.
85. Electronic sensors.
86. Pivotal arm, on which the mechanical unit's wheel is fixed from both sides of the rail track.
87. Mechanical unit's wheel. In fact there are two wheels, one on the right of the rail way, and the other is on the left side.

## Claims

1. A system to protect trains, automobiles, ships and their passengers from accidents characterized by a hydraulic, electronic and mechanical device mounted between the fender and the chassis at the front side and in automobiles also at the rear side, which consists of two integrated units, the first mounted in the forepart of the automobile or train between fender and chassis, the second unit mounted at the automobile or train floor, comprising
- the button (67) to release the arm (68), which belongs to the toothed mechanical device (30), by this pushing the arm forward in the same manner as the arm of the hand-brake, the button (67) sending an electrical command to the electrical switch (37) to function and to get back a little, i.e. a short distance to enable the joint bearing (16) to be released, releasing also the bearing (18) fixed on the steel cable (8); the electronic switch (37) opens and pushes the hydraulic piston (9) forward and the fender (1) moves forward with the rail (4), the same happens to the steel cable (8) mounted in hole (36), and the springs (34) become free, the double joints (7) open, i.e. the complete unit moves forward and gets ready to absorb any external impact; where in order to avoid concentration of the whole impact pressure on the frontal part of the automobile, and in order to relieve this pressure the impact-pressure is distributed in a way that the spring (34), fixed in the fender unit (1), absorbs one third of the impact force, and at the same time the ball (46) receives two thirds of the impact force and transmits it to a stronger spring to absorb it, the transmission being effected via the metallic ball (46), in this manner the impact pressure being distributed on two units: the upper one of the fender (1) and the lower one, which is fixed at the automobile floor, the impact force thus approaching zero, which saves the automobile from distortion and harm and the passengers from danger,
- three or more electronic sensors (85) for shocks fitted on the frontal part of the system in front of the train fender, and being distributed in a suitable manner in order to receive the shock before other elements and send instant order to the train wheels to brake at once, while at the same time the system starts functioning to absorb the shock, diminishing the shock force to zero and keeping the train and its passengers unharmed; where the device is mounted in the frontal part of the locomotive and after every 5-10 such devices a small four-wheel wagon is connected that moves on the railway in front of the locomotive, loaded suitably with suitable weights in order not to go off-rail when it receives a sudden blow, the length of this device and system being designed according to the weight of the train and its maximum speed, the parts being combined via joint (19) on the pivotal center (69) and on the pivotal center (72); where the frontal part (70) of the device upon receiving a sudden shock on one of the electronic brake sensors (85) directly and gives an electronic order to the emergency brakes of the train, which automatically brings the train to an immediate halt, while at the same time the device starts functioning to absorb the shock, as its length being proportional to weight and speed of the train is suitable to neutralize the force; where to enhance safety and for complete protection of passengers and train a mechanical unit (87) is added, connected to the frontal part of the said mini-wagon, this unit being intended to protect the train in cases of earthquake that causes a shift in railway tracks, terrorist actions, blocking of railway tracks by items such as rocks, treetrunks, other wagons, containers etc., giving an electronic order to the train brakes to automatically stop the train: in case of an earthquake, a void space would occur between the railway trucks, so the wheel of the unit (87) with the joint (86) would fall in the void formed by the earthquake and the electronic sensors (85) will be pressed giving the immediate order to the brakes to stop the train at once, or in case of hard items on the rails, the wheel will rise over those hard items and press the electronic sensor giving the immediate order to the brakes to stop the train, so in both cases the mechanical unit (87) responds and presses the sensor, which functions to halt the train.

2. The system according to claim 1, characterized in that operation is performed in four parts according to the speed of the automobile, where the beginning and the end of each part is controlled by a hydraulic electronic controller.

3. The system according to claim 1, characterized in that the device is connected to a small four-wheel wagon that moves on the railway in front of the locomotive, suitable loaded with weights, designed according to the weight of the train and its maximum speed.

4. The use of the system according to claims 1 and 2 to protect automobiles, trucks, buses and any other automobile and their passengers both within cities and outside when driving at high or low speed.

5. The use of the system according to claims 1 and 3 to protect trains.

6. The use of the system according to claims 1 and 3 to protect ships.
